# EUROPEAN PATENT SPECIFICATION

(11) **EP 1 686 021 B1**
(45) Date of publication and mention of the grant of the patent: **19.12.2007**
(21) Application number: 06001141.8
(22) Date of filing: 19.01.2006
(51) Int. Cl.: B60R 21/26

(54) **Gas generator for air bag**
Gasgenerator für einen Airbag
Générateur de gaz pour un sac gonflable

(30) Priority: 28.01.2005 JP 2005020534
(43) Date of publication of application: 02.08.2006
(73) Proprietor: DAICEL CHEMICAL INDUSTRIES, LTD., Sakai-shi, Osaka (JP)
(72) Inventor: Yamazaki, Masayuki, Tatsuno-shi Hyogo (JP); Ueda, Masayuki, Yokohama-shi Kanagawa (JP)
(74) Representative: Grünecker, Kinkeldey, Stockmair & Schwanhäusser Anwaltssozietät

(56) References cited:
- EP-A- 1 118 512
- DE-A1- 10 040 822
- US-A- 5 804 758
- US-A- 6 149 193
- US-A1- 2004 070 186
- US-B1- 6 547 277
- PATENT ABSTRACTS OF JAPAN vol. 016, no. 428 (M-1307), 8 September 1992 (1992-09-08) & JP 04 146842 A (NIHON KOUKI KK; others: 01), 20 May 1992 (1992-05-20)

## Description

### Background of the Invention

### Field of the Invention

The present invention relates to a gas generator for an air bag, according to the preamble of claim 1, said air bag being used in an air bag system of an automobile.

### Description of the Related Art

A gas generator of the above type is know from DE 100 40 822 A1.

In an air bag system in which the inflation speed of an air bag can be adjusted according to the magnitude of the impact generated during a collision, a plurality of igniters and gas generating agents that are ignited and burned by the respective igniters are disposed in a plurality of combustion chambers. In this type of gas generator, the respective gas generating agents should be ignited and burned independently, and therefore the plurality of combustion chambers in the interior of a housing are completely separated from each other by a partition wall (see JP-A No. 2001-97175, for example).

Meanwhile, a gas generating agent (solid gas generating agent) used in a conventional gas generator often takes a pellet form, disk form, single-perforated form, or porous form (see JP-A No. 2001-97175, for example). These solid gas generating agents have a small individual size, and are therefore difficult to handle when assembling the gas generator.

JP-A No. 2002-204947 discloses a reciprocating end-burning-type gas generator in which a gas generating agent 10 is charged into a combustor 4 in a plurality of layers via a restrictor 9, and the layers of the gas generating agent 10 are disposed in a continuous fashion so that end face burning proceeds sequentially through each layer.

### Summary of The Invention

The present invention provides a gas generator for an air bag according to claim 1, said gas generator including:
a housing having a plurality of gas discharge ports;
a gas generating agent molded article formed in a desired three-dimensional shape having a plurality of surfaces, which is charged into the housing; and
a plurality of ignition devices for igniting and burning the gas generating agent molded article,
the gas generating agent molded article, which is formed in the desired three-dimensional shape, having a contact surface contacting a housing inner wall surface, and a plurality of open faces that do not contact the housing inner wall surface,
at least one ignition device being disposed facing one of the open faces,
the gas generating agent molded article, which is formed in the desired three-dimensional shape, being ignited and beginning to burn from the open faces only so that combustion can progress in a plurality of different directions.

The present invention further provides a gas generator for an air bag including:
a cylindrical housing, both ends of which are closed, having a plurality of gas discharge ports in both end sides thereof;
a columnar gas generating agent molded article charged into the cylindrical housing; and
an ignition device for igniting and burning the gas generating agent molded article,
the columnar gas generating agent molded article having a peripheral surface contacting a housing inner wall surface, and two open end faces which do not contact the housing inner wall surface,
at least one ignition device being disposed at each end of the housing, facing one of the end faces of the columnar gas generating agent molded article,
the columnar gas generating agent molded article being ignited and beginning to burn only from the two open end faces.

The present invention further provides a gas generator for an air bag including:
a three-pronged housing having a three-pronged planar form and provided with a plurality of gas discharge ports in three end portion sides thereof;
a three-pronged gas generating agent molded article charged into the three-pronged housing; and
an ignition device for igniting and burning the gas generating agent molded article,
the three-pronged gas generating agent molded article having a peripheral surface contacting a housing inner wall surface, and three open end faces which do not contact the housing inner wall surface,
at least one ignition device being disposed at each of the three end portions of the housing, facing one of the open end faces of the three-pronged gas generating agent molded article, and
the three-pronged gas generating agent molded article being ignited and beginning to burn only from the three open end faces.

The present invention further provides a gas generator for an air bag including:
a housing having a circular planar form and a predetermined thickness, provided with a plurality of gas discharge ports in one inferior arc opposing another inferior arc;
a gas generating agent molded article charged into the interior of the housing, excluding areas in the vicinity of the two inferior arcs; and
an ignition device for igniting and burning the gas generating agent molded article,
the gas generating agent molded article having a contact surface contacting an inner peripheral surface, a ceiling surface, and a bottom surface of the housing, and two open faces open to the two inferior arc sides, which do not contact the inner peripheral surface, ceiling surface, and bottom surface of the housing,
at least one ignition device being disposed at each of the open faces, facing one open face, and
the gas generating agent molded article is ignited and begins to burn only from the two open faces.

The present invention further provides a gas generator for an air bag including:
a housing having a circular planar form and a predetermined thickness, provided with a plurality of gas discharge ports in one inferior arc opposing another inferior arc;
a gas generating agent molded article charged into the interior of the housing, excluding areas in the vicinity of the two inferior arcs; and
an ignition device for igniting and burning the gas generating agent molded article,
two partition walls being disposed in positions linking two points on the circumference to form the two opposing inferior arc parts, and a coolant/filter being disposed between the gas discharge ports and each partition wall,
the ignition device being disposed in each of two remaining opposing inferior arc parts,
the gas generating agent molded article having a contact surface contacting the two partition walls, a ceiling surface of the housing, and a bottom surface of the housing, and two open faces open to the two ignition device sides, which do not contact the two partition walls, the ceiling surface of the housing, and the bottom surface of the housing,
the gas generating agent molded article ignited and beginning to burn only from the two open faces.

The above shown three-pronged planar form of the three-pronged housing means three prongs in a plan view of the three-pronged housing.

The circular planar form of the housing means the form in a plan view.

### Brief Description of the Drawings

The present invention will become more fully understood from the detailed description given hereinbelow and the accompanying drawings which are given by way of illustration only, and thus are not limitative of the present invention and wherein:
Fig. 1 shows an axial sectional view of a gas generator for an air bag;
Fig. 2 shows an axial sectional view of a gas generator for an air bag according to another embodiment;
Fig. 3 shows an axial sectional view of a gas generator for an air bag according to another embodiment;
Fig. 4 shows an axial sectional view of a gas generator for an air bag according to another embodiment;
Fig. 5 shows an axial sectional view of a gas generator for an air bag according to another embodiment;
Fig. 6 shows a radial sectional view of a gas generator for an air bag according to another embodiment; and
Fig. 7 shows a radial sectional view of a gas generator for an air bag according to another embodiment.

### Detailed Description of the Invention

When the gas generator disclosed in JP-A No. 2001-97175 is applied to an air bag system in which the inflation speed of the air bag can be adjusted in accordance with the magnitude of the impact generated during the collision, a plurality of combustion chambers should be provided, and therefore an operation to charge a large number of gas generating agent molded articles in pellet form or the like should be performed.

In JP-A No. 2002-204947, the gas generating agent is ignited and burned by an igniter 11 from one end side only, and therefore the gas generator disclosed in JP-A No. 2002-204947 cannot be applied to an air bag system in which the inflation speed of the air bag can be adjusted in accordance with the magnitude of the impact generated during the collision.

The present invention is to provide a gas generator for an air bag in which the inflation speed of the air bag can be adjusted in accordance with the magnitude of the impact generated during a collision, and in which an operation to charge a gas generating agent molded article can be performed easily.

The gas generating agent molded article of the present invention includes the one formed by charging a gas generating agent into the housing to mold it into a predetermined shape, and also the one formed of a gas generating agent that is molded into a predetermined shape in advance, and then charged into the housing. This applies to each of the inventions described below.

In a gas generator for an air bag used in an air bag system of an automobile, it is desirable to be able to adjust the inflation speed of the air bag in accordance with the manner of the vehicle collision (the magnitude of the impact generated during the collision) in order to improve the passenger protection performance. More specifically, assuming that the magnitude of the impact can be divided into three levels, large, medium, and small, when the magnitude of the impact is large, the air bag should be inflated most quickly, when the magnitude of the impact is small, the air bag should be inflated most slowly, and when the magnitude of the impact is intermediate, the air bag should be inflated over an intermediate time period.

The gas generator for an air bag according to the present invention differs from the invention disclosed in JP-A No. 2001-97175, in which a plurality of combustion chambers are formed by dividing the interior of the housing, in that a single combustion chamber is provided in the housing, and the gas generating agent molded article having the desired three-dimensional shape is ignited and begins to burn only from the open faces thereof. Thus, combustion can progress in a plurality of different directions, and similar effects to those obtained when two combustion chambers are provided can be achieved.

Note that when two combustion chambers are provided, as in the invention disclosed in JP-A No. 2001-97175, only one ignition device is activated when the impact is small such that only the gas generating agent molded article in one of the combustion chambers is burned. However, to ensure safety during demolition of the vehicle, the other ignition device should be activated to burn the gas generating agent molded article in the other combustion chamber at a time difference that does not affect air bag inflation for the purpose of passenger protection. In the present invention, on the other hand, the gas generating agent molded article is burned completely even when only one of the ignition devices is activated, and hence there is no need for an operation to process unburned gas generating agent at a later stage.

Moreover, since the gas generating agent molded article need only be charged into a single combustion chamber (gas generating agent charging chamber), there is no need to charge gas generating agents separately into each of two combustion chambers, as in the invention disclosed in JP-A No. 2001-97175.

In the gas generator for an air bag of the present invention, an ignition device is disposed so as to face each of the plurality of open faces of the gas generating agent molded article having the desired three-dimensional shape, and hence when there are two open faces, for example, the gas generating agent molded article can be ignited and burned from the two different open faces.

Accordingly, the three following combustion patterns can be implemented in the gas generator for an air bag of the present invention.
(I) The gas generating agent molded article is ignited and burned from the two open faces simultaneously.
(II) The two open faces of the gas generating agent molded article are ignited and burned at a time difference.
(III) The gas generating agent molded article is ignited and burned from only one of the open faces.

By implementing combustion patterns such as those described in (I) to (III), the generation amount (generation amount per unit time) of combustion gas, which serves as an air bag inflation medium, can be controlled, and therefore the air bag inflation speed can be adjusted. By adjusting the gas generating agent combustion pattern in accordance with the manner of the vehicle collision (the magnitude of the impact generated by the collision), the air bag inflation speed (gas generator output performance) can be adjusted, and hence the passenger protection performance can be enhanced.

The present invention relates to the gas generator for an air bag, wherein the gas generating agent is charged into a charging container having a desired shape, the gas generating agent has a contact surface contacting an inner wall surface of the charging container, and a plurality of open faces that do not contact the inner wall surface of the charging container, and the charging container is inserted into the housing.

When this type of charging container is used, the charging operation is easier compared with the case in which the gas generating agent molded article is charged into the housing.

The present invention relates to the gas generator for an air bag, wherein a combustion control member is also disposed in the housing, and the gas generating agent molded article has a contact surface contacting the combustion control member, or the combustion control member and the housing inner wall surface, and a plurality of open faces that do not contact the combustion control member, or the combustion control member and the housing inner wall surface.

When a combustion control member having a desired shape (a plate-form, cylindrical form, or other form) and made of a non-combustible material such as metal is used, and the combustion control member is combined with the inner wall surface of the housing, a contact surface and open faces can be formed on the gas generating agent molded article having a desired three-dimensional shape (plate-form, columnar form, angled columnar form, cylindrical form, or other form).

The present invention relates to the gas generator for an air bag, wherein the gas generating agent molded article is ignited and begins to burn from the open faces alone, and a combustion surface area of the gas generating agent molded article is set to vary as the combustion progresses.

Methods such as the following may be applied to vary the combustion surface area of the gas generating agent molded article.
(i) A method of increasing or decreasing the sectional area of the gas generating agent molded article in the width direction by increasing or decreasing the sectional area of the housing (in the width direction).
(ii) A method of increasing or decreasing the sectional area of the gas generating agent molded article in the width direction by increasing or decreasing the sectional area of the charging container of the gas generating agent molded article (in the width direction).
(iii)A method of increasing or decreasing the sectional area of the gas generating agent molded article in the width direction using the combustion control member.
(iv) A method combining (i) to (iii) appropriately.

By varying the combustion surface area of the gas generating agent molded article using methods such as (i) to (iv), the generation amount (generation amount per unit time) of combustion gas, which serves as an air bag inflation medium, can be controlled, and therefore the air bag inflation speed (gas generator output performance) can be adjusted more finely.

The present invention relates to the gas generator for an air bag, wherein at least two of the plurality of gas discharge ports are formed with distance from each other, and combustion gas generated by the combustion of the gas generating agent molded article passes along different gas discharge paths to be discharged through the different gas discharge ports.

By disposing a coolant/filter in the vicinity of the respective different gas discharge ports, similarly to a conventional gas generator, the cooling effect can be enhanced, and as a result, the air bag inflation speed (gas generator output performance) can be adjusted even more finely.

The combustion patterns of (I) to (III) described above can be implemented on the two end faces of the columnar gas generating agent, and hence the air bag inflation speed can be adjusted. By adjusting the combustion pattern of the gas generating agent molded article in accordance with the manner of the vehicle collision (the magnitude of the impact generated by the collision), the air bag inflation speed (the gas generator output performance) can be adjusted, and hence the passenger protection performance can be enhanced.

Note that the sectional form of the cylindrical housing in the width direction may take an elliptical shape, polygonal shape, or other shape instead of a circular shape, and in such cases, the gas generating agent molded article takes a shape corresponding to the shape of the housing rather than a circular shape. In either case, the gas generating agent molded article exhibits identical functions.

In the gas generator for an air bag of this invention, a three-pronged gas generating agent having three open end faces is used, and therefore the following three combustion patterns can be implemented.
(I') The gas generating agent molded article is ignited and burned from the three open end faces simultaneously.
(II')The three open end faces of the gas generating agent molded article are ignited and burned at a time difference.
(III') The gas generating agent molded article is ignited and burned from only one or two of the open end faces.

By implementing combustion patterns such as those described in (I') to (III'), the generation amount (generation amount per unit time) of combustion gas, which serves as an air bag inflation medium, can be controlled, and therefore the air bag inflation speed can be adjusted. By adjusting the combustion pattern of the gas generating agent molded article in accordance with the manner of the vehicle collision (the magnitude of the impact generated by the collision), the air bag inflation speed (gas generator output performance) can be adjusted, and hence the passenger protection performance can be enhanced.

By implementing the combustion patterns of (I) to (III) described above on the two open faces of the gas generating agent molded article, the air bag inflation speed can be adjusted. By adjusting the combustion pattern of the gas generating agent molded article in accordance with the manner of the vehicle collision (the magnitude of the impact generated by the collision), the air bag inflation speed (gas generator output performance) can be adjusted, and hence the passenger protection performance can be enhanced.

Note that the planar form of the housing may be elliptical, square (rectangular or square), or polygonal (hexagonal or the like) rather than circular. When the planar form of the housing is polygonal, the angled part at which two sides meet may be rounded. When formed in this manner, the housing exhibits identical functions as those exhibited when the planar form thereof is circular.

When the planar form is elliptical, the plurality of gas discharge ports and ignition devices are provided on any two opposing arc sides, and a gas generating agent molded article having a rectangular planar form or the like is charged into the remaining portion.

When the planar form is square (rectangular), the plurality of gas discharge ports and ignition devices are provided on the two opposing short sides, and a gas generating agent molded article having a rectangular or square planar form or the like is charged into the remaining portion.

When the planar form is hexagonal, the plurality of gas discharge ports and ignition devices are provided on any two opposing sides of the six sides, and a gas generating agent molded article is charged into the remaining portion to have a square, rectangular, or other polygonal planar form.

The combustion patterns of (I) to (III) described above can be implemented on the two open faces of the gas generating agent molded article, and hence the air bag inflation speed can be adjusted. By adjusting the combustion pattern of the gas generating agent molded article in accordance with the manner of the vehicle collision (the magnitude of the impact generated by the collision), the air bag inflation speed (gas generator output performance) can be adjusted, and hence the passenger protection performance can be enhanced.

Note that the planar form of the housing may be elliptical, square (rectangular or square), or polygonal (hexagonal or the like) rather than circular. When the planar form of the housing is polygonal, the angled part at which two sides meet may be rounded. When formed in this manner, the gas generating agent molded article exhibits identical functions to those exhibited when the planar form thereof is circular.

When the planar form is elliptical, the plurality of gas discharge ports are provided on any two opposing arc sides, the ignition devices are provided on the remaining two opposing arc sides, and a gas generating agent molded article having a rectangular or square planar form or the like is charged into the remaining portion.

When the planar form is square (rectangular), the plurality of gas discharge ports are provided on the two opposing short sides, the ignition devices are provided on the remaining two opposing sides, and a gas generating agent molded article having a rectangular or square planar form or the like is charged into the remaining portion.

When the planar form is hexagonal, the plurality of gas discharge ports are provided on any two opposing sides of the six sides, the ignition devices are provided on any two opposing sides of the remaining four sides, and a gas generating agent molded article having a rectangular, square, or other polygonal planar form is charged into the remaining portion.

The gas generating agent molded article used in the present invention may take any overall form provided that open faces can be formed. The entire gas generating agent molded article is preferably molded integrally, but conventional gas generating agent molded articles in pellet-form, block-form, or the like may be charged without gaps and thereby integrated. When this type of gas generating agent molded article used, no gaps exist unlikely to a case in which pellet-form gas generating agent molded bodies or the like are charged, and hence the overall volume thereof can be reduced by the absence of gaps while maintaining the same generated gas amount.

The gas generating agent molded article used in the present invention may take a liquid form, a gelatinous form, a cream form, a powder form, a colloid form, or another form, for example, and may be molded into a desired shape such as a cylindrical shape, a columnar shape, an angled columnar shape, or an angled cylindrical shape by a method such as drying, reactive curing, compression, or gelation.

The gas generating agent molded article used in the present invention preferably uses one or a mixture of fuels selected from RDX, HMX, 5-nitrotetrazole, 1H-tetrazole, 5-aminotetrazole, 1H-tetrazole-1, 5-diamine, guanidine nitrate, mono-amine guanidine nitrate, carbodihydrazide, triamine guanidine nitrate, 1, 2, 4-triazole-3-on, 5, 5'-bi-1H-tetrazole, dicyandiamide, azodicarbonamide, glycine, semicarbazone, 1H-1, 2, 4-triazole-3, 5-diamine, 4-amino guanazole, and guanylurea nitrate, and preferably uses one or a mixture of oxidants selected from potassium perchlorate, ammonium percholate, sodium percholate, strontium percholate, potassium nitrate, ammonium nitrate, sodium nitrate, and strontium nitrate.

The gas generating agent molded article used in the present invention differs from a conventional gas generating agent molded article, in which all of the gas generating agent molded articles (a plurality of gas generating agents such as pellets or single-perforated forms) burn in a substantially overall burning state, in that open faces of a gas generating agent having a three-dimensional form are ignited and burned. Therefore, a gas generating agent that has the best possible ignitability and combustion performance is preferably used. Accordingly, the burning rate of the gas generating agent under 10MPa of pressure is preferably not less than 30mm/sec.

Furthermore, a combustion accelerator is preferably mixed into and dispersed throughout the gas generating agent molded article. One of the following combustion accelerators (a) and (b) is preferably used as the combustion accelerator:
(a) a combustion accelerator which contributes directly to combustion of the gas generating agent molded article by burning itself in order to raise the combustion temperature further; and
(b) a combustion accelerator which does not contribute directly to combustion of the gas generating agent molded article, but provides conditions for accelerating combustion.

An example of the combustion accelerator described in (a) includes a conventional gas generating agent containing mixture of boron and potassium nitrate, nitroguanidine or the like as a fuel and strontium nitrate or the like as an oxidant, which creates an environment with a higher combustion temperature than the gas generating agent (the original gas generating agent) into which the combustion accelerator is mixed and dispersed. The combustion accelerator in (a) may contain metallic particles.

An example of the combustion accelerator described in (b) includes a microcapsule, which is a hollow micro-particle, the combustion surface area of which increases at one of the combustion stages of the gas generating agent (the original gas generating agent) into which the combustion accelerator is mixed and dispersed, thereby accelerating combustion. The microcapsule is preferably formed to burn out or split open as the gas generating agent burns. The combustion accelerator in (b) may also contain metallic particles.

A combustion accelerator such as that described above, which is used to accelerate combustion of the gas generating agent molded article, preferably has an average particle diameter between 1 and 1000µn, and more preferably between 3 and 500µm. More particularly, the particle diameter per particle of the combustion accelerator is preferably between 1 and 1000µn, and more preferably between 3 and 500µm.

A particularly preferable example of the gas generating agent molded article used in the present invention includes 40% by mass of RDX as a fuel, 58% by mass of potassium perchlorate as an oxidant, 1% by mass of sodium carboxymethyl cellulose as a molding binder, and 1% by mass of plastic microcapsule as the combustion accelerator.

The gas generating agent molded article used in the present invention is preferably provided with a reinforcing member for preventing irregularities such as cracks and chips occurring in the open face of the gas generating agent molded article due to shock generated by the impact of an operation of the gas generator (an operation of the ignition device) or when the inflator is dropped. The reinforcing member is formed by adhering a film or a porous thin plate to the open face, on which ignition and combustion begin, or coating the open face with a thermosetting resin or the like. By preventing cracks and chips in the gas generating agent, variation in the surface area of the open face can be prevented, and hence a stable performance can be maintained.

An ignition aid containing a material having greater ignitability than the gas generating agent molded article may be provided on the open face of the gas generating agent molded article. A film-form member coated with a transfer charge on one surface or both surfaces thereof, a porous thin plate member impregnated with a black powder such as boron niter, or a slurry-form substance mixed with an explosive and cured on the combustion starting end face of the gas generating agent molded article may be used as the ignition aid. The ignition aid may also function similarly to the reinforcing member described above to prevent the occurrence of irregularities such as cracks or chips on the open face of the gas generating agent molded article.

In the gas generator for an air bag of the present invention, a gas generating agent molded article having a desired three-dimensional shape with a contact surface and open faces is used. The gas generating agent molded article is ignited and begins to burn from the open faces alone, and therefore combustion can progress in a plurality of different directions. Hence, the combustion patterns described above in (I) to (III) or (I') to (III') can be implemented on the two open faces of the gas generating agent molded article, enabling adjustment of the air bag inflation speed. By adjusting the combustion pattern of the gas generating agent molded article in accordance with the manner of the vehicle collision (the magnitude of the impact generated by the collision), the air bag inflation speed (gas generator output performance) can be adjusted, enabling an improvement in the passenger protection performance.

### Preferred Embodiments of the Invention

Embodiments of the gas generator for an air bag according to the present invention will be described below. The gas generator of the present invention may be applied to various well-known air bag applications such as an air bag for a driving side, an air bag for a front passenger side, and an air bag for lateral collision. Further, the gas generator of the present invention may be applied for use in an application in which a plurality of air bags are connected to and inflated by a single gas generator (for example, a gas generator for a lateral collision air bag which protects the chest, waist, and knees).

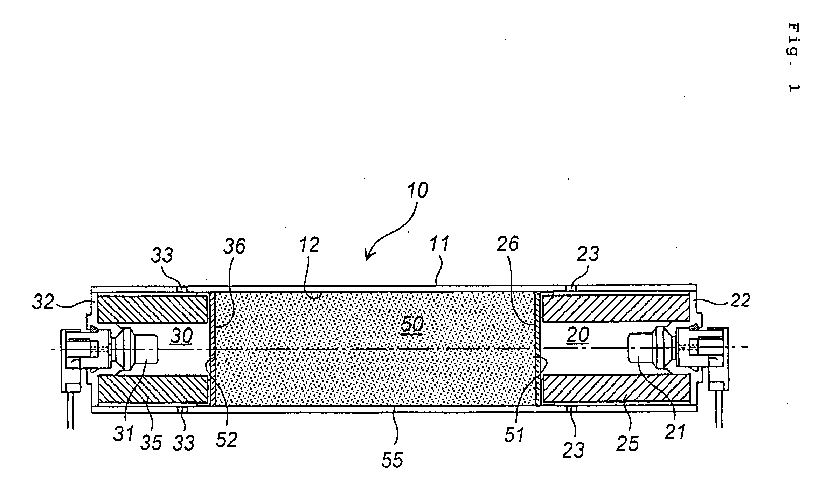

### (1) Gas generator of Fig. 1

Fig. 1 is an axial sectional view of a gas generator 10 for an air bag. The gas generator 10 for an air bag in Fig. 1 is suitable for use for driver side or front passenger side.

A first ignition device accommodating chamber 20 is provided at one end side of a cylindrical housing 11, and a first igniter 21 fitted into an igniter collar 22 is mounted in the first ignition device accommodating chamber 20. This end portion of the cylindrical housing 11 is integrated with a contact surface of the igniter collar 22 by welding.

A plurality of first gas discharge ports 23 are provided in the housing 11 in which the first ignition device-accommodating chamber 20 is provided. To ensure moisture resistance, the first gas discharge ports 23 are sealed from the inside by an aluminum tape.

A cylindrical coolant/filter 25 is disposed in the first ignition device accommodating chamber 20. A well-known filter formed from laminated and integrated wire mesh may be used as the coolant/filter 25. A gap exists between the outer peripheral surface of the coolant/filter 25 and the first gas discharge ports 23.

A second ignition device accommodating chamber 30 is provided at the other end side of the cylindrical housing 11, and a second igniter 31 fitted into an igniter collar 32 is mounted in the second ignition device accommodating chamber 30. The other end portion of the cylindrical housing 11 is integrated with a contact surface of the igniter collar 32 by welding.

A plurality of second gas discharge ports 33 are provided in the housing 11 in which the second ignition device-accommodating chamber 30 is provided. To ensure moisture resistance, the second gas discharge ports 33 are sealed from the inside by an aluminum tape.

A cylindrical coolant/filter 35 is disposed in the second ignition device accommodating chamber 30. A well-known filter formed from laminated and integrated wire mesh may be used as the coolant/filter 35. A gap exists between the outer peripheral surface of the coolant/filter 35 and the second gas discharge ports 33.

The interior space of the housing 11 excluding the first ignition device accommodating chamber 20 and second ignition device accommodating chamber 30 serves as a combustion chamber (gas generating agent charging chamber), and is charged with a columnar gas generating agent molded article 50.

The columnar gas generating agent molded article 50 has a peripheral surface 55 which contacts a housing inner wall surface 12, and open end faces 51, 52 which do not contact the housing inner wall surface 12.

The columnar gas generating agent molded article 50 includes 40% by mass of RDX as a fuel, 58% by mass of potassium perchlorate as an oxidant, 1% by mass of sodium carboxymethyl cellulose as a molding binder, and 1% by mass of plastic microcapsule as a combustion accelerator, and has a linear burning rate of 32mm/sec under 10MPa of pressure. A similar gas generating agent molded article may also be used in the embodiments to be described below.

The columnar gas generating agent molded article 50 is manufactured using the following method. 1% by mass of carboxymethyl cellulose ("CMC DAICEL #2260" produced by Daicel Chemical Industries Ltd.) is added to 50% by mass of ion-exchanged water and it is stirred and dissolved at a controlled temperature of 40°C. Thereafter, 40% by mass of RDX (a powder produced by Nippon Koki Co., Ltd.), 58% by mass of potassium perchlorate ("KPD2" produced by Japan Carlit Co., Ltd.), and 2% by mass of a plastic microcapsule ("MYS F-80E" produced by Matsumoto Yushi-Seiyaku Co., Ltd.) are then introduced, and the mixture is stirred slowly for another hour until mixed evenly. The mixture is then left to cool to ambient temperature, whereby a colloidal hydrous gas generating agent is obtained. A predetermined amount of the hydrous composition is charged into a desired housing (or another container in certain cases) and dried for twenty-four hours at 110°C . The gas generating agent molded article may be manufactured by a similar method in the embodiments to be described below.

Note that the columnar gas generating agent molded article 50 is entirely a single molded article, but may be formed by combining a plurality of blocks. For example, between approximately two and ten (or more in certain cases) disk-form gas generating agent molded articles having a predetermined thickness may be charged into the housing, together forming the single columnar gas generating agent molded article 50. This applies likewise to the gas generators in each of the following drawings.

A disk-form first transfer charge 26 is disposed between the end face 51 of the gas generating agent molded article and the first ignition device accommodating chamber 20 (coolant/filter 25). The disk-form first transfer charge 26 forms an ignition device together with the first igniter 21, and examples of the first transfer charge may include a plate-form, combustible (and porous) material such as sponge impregnated with a transfer charge, and a similar combustible material coated with a slurry-form transfer charge.

A disk-form second transfer charge 36 is disposed between the end face 52 of the gas generating agent molded article and the second ignition device accommodating chamber 30 (coolant/filter 35). The second transfer charge 36 forms an ignition device together with the second igniter 31, and the article formed in the same manner as the first transfer charge 26 may be used.

The end face 51 of the gas generating agent molded article 50 opposes one of the ignition devices (the first igniter 21 and first transfer charge 26), and the end face 52 of the gas generating agent molded article 50 opposes the other ignition device (second igniter 31 and second transfer charge 36).

Next, an operation of the gas generator 10 shown in Fig. 1 when incorporated into an air bag system will be described. The two igniters may be activated simultaneously or at a time difference, or only one of the igniters may be activated. Below, a case in which the two igniters are activated at a time difference will be described. Note that differentiation between the terms "first" and "second" in the gas generator 10 is merely for convenience of description and does not limit the activation sequence. Accordingly, the second igniter 31 may be activated first, followed by the first igniter 21 at a delay.

The first igniter 21 is activated first, igniting and burning the first transfer charge 26 such that high-temperature combustion products (a flame, high-temperature gas, thermo-particles, and so on) are generated. As a result of these high-temperature combustion products, the columnar gas generating agent molded article 50 begins to burn from the end face 51, generating combustion gas. At this time, the peripheral surface 55 on the end face 51 side is in contact with the housing inner wall surface 12, and therefore does not burn. Instead, combustion advances in the axial direction only, so as to generate combustion gas.

The generated combustion gas flows into the first ignition device accommodating chamber 20, passes through the coolant/filter 25, and is discharged through the first gas discharge ports 23 to inflate the air bag.

Next, the second igniter 31 is activated at a slight delay following activation of the first igniter 21, thereby igniting and burning the second transfer charge 36 to generate high-temperature combustion products. As a result of these high-temperature combustion products, the columnar gas generating agent molded article 50 begins to burn from the end face 52, generating combustion gas. At this time, the peripheral surface 55 on the end face 52 side is in contact with the housing inner wall surface 12, and therefore does not burn. Instead, combustion advances in the axial direction only, so as to generate combustion gas.

The generated combustion gas flows into the second ignition device accommodating chamber 30, passes through the coolant/filter 35, and is discharged through the second gas discharge ports 33 to inflate the air bag further. In this manner, combustion advances inward from the end faces 51, 52, and when the two burning surfaces meet, combustion ends.

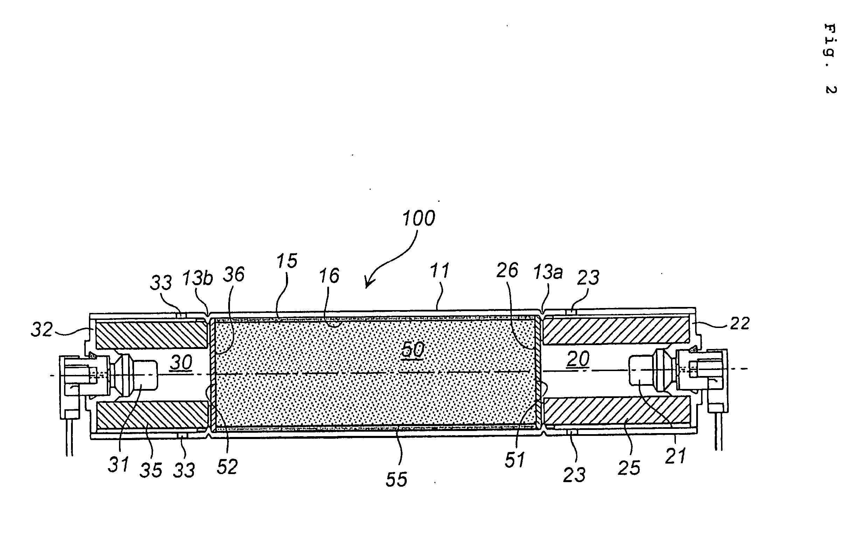

### (2) Gas generator of Fig. 2

Fig. 2 is an axial sectional view of a gas generator 100 for an air bag. The gas generator 100 for an air bag shown in Fig. 2 has a substantially identical structure to that of the gas generator 10 for an air bag shown in Fig. 1, and therefore only different parts will be described. Note that in Fig. 2, identical reference numerals to those used in Fig. 1 denote identical components. The gas generator 100 for an air bag of Fig. 2 is suitable for use for driver side or front passenger side.

In the gas generator 100 of Fig. 2, the columnar gas generating agent molded article 50 is charged into a cylindrical charging container 15 instead of being charged directly into the housing 11. The manufacturing method for the gas generating agent molded article 50 when using the charging container 15 is identical to that of the case illustrated in Fig. 1. Note that an inner wall surface 16 of the cylindrical charging container 15 corresponds to the housing inner wall surface 12 in Fig. 1.

The cylindrical charging container 15 is inserted into the housing 11 and fixed by pressing the housing 11 from the outside to form annular recessed portions 13a, 13b.

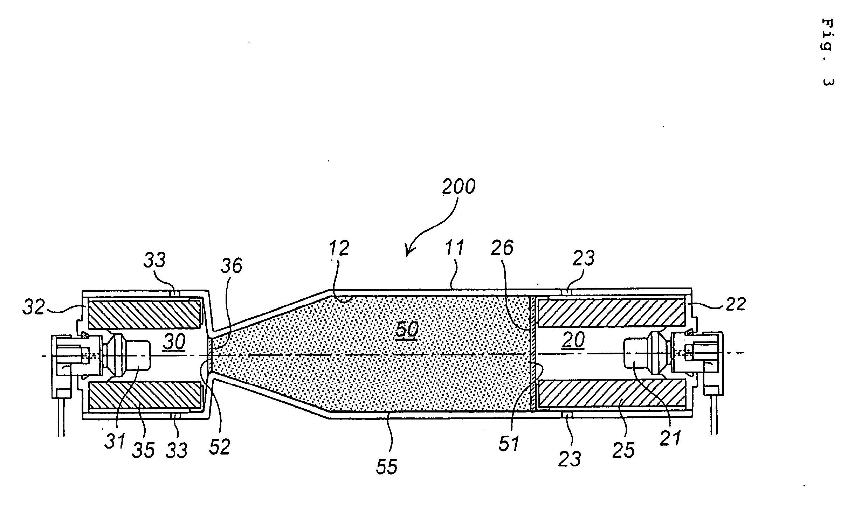

### (3) Gas generator of Fig. 3

Fig. 3 is an axial sectional view of a gas generator 200 for an air bag. The gas generator 200 for an air bag shown in Fig. 3 has a substantially identical structure to that of the gas generator 10 for an air bag shown in Fig. 1, and therefore only different parts will be described. Note that in Fig. 3, identical reference numerals to those used in Fig. 1 denote identical components. The gas generator 200 for an air bag of Fig. 3 is suitable for use for driver side or front passenger side. In the gas generator 200 of Fig. 3, the sectional area of the housing 11 (i.e. the columnar gas generating agent molded article 50) in the radial direction (width direction) differs between the end face 51 side and the end face 52 side. The sectional area of the housing 11 is smallest at the end face 52, increases gradually toward the end face 51 side, and becomes constant from a point on the housing 11 up to the end face 51.

Note that since the surface area of the gas generating agent molded article 50 is small at the end face 52 thereof, the second transfer charge 36 need not be provided.

Hence, in the gas generator 200 of Fig. 3, when the second gas igniter 31 is activated (either after activation of the first igniter 21 or before activation of the first igniter 21), thereby igniting and burning the second transfer charge 36 such that the columnar gas generating agent molded article 50 begins to burn from the end face 52, the generated gas amount per unit time is small during the initial combustion stage, but as combustion progresses, the sectional area of the gas generating agent molded article 50 increases, and therefore the generated gas amount also increases. Accordingly, by adjusting the activation timing of the two igniters, the generated gas amount per unit time can be adjusted more finely.

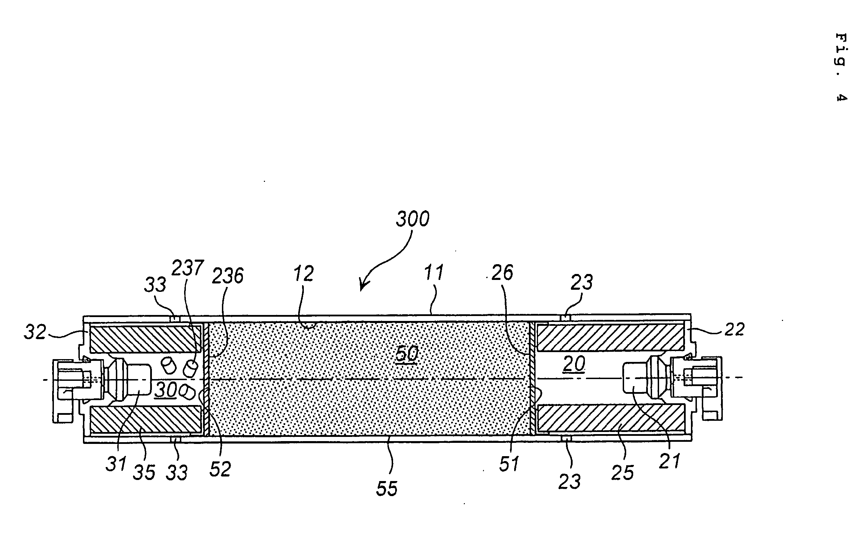

### (4) Gas generator of Fig. 4

Fig. 4 is an axial sectional view of a gas generator 300 for an air bag. The gas generator 300 for an air bag shown in Fig. 4 has a substantially identical structure to that of the gas generator 10 for an air bag shown in Fig. 1, and therefore only different parts will be described. Note that in Fig. 4, identical reference numerals to those used in Fig. 1 denote identical components. The gas generator 300 for an air bag of Fig. 4 is suitable for use for driving side or front passenger side.

A molded article 237 (formed by a well-known transfer charge or gas generating agent) which acts as a transfer charge is charged into the second ignition device accommodating chamber 30. Accordingly, a combustible partition plate (a sponge or the like) 236 is provided in place of the second transfer charge 36 shown in Fig. 1. Note that a similar arrangement may be provided in the first ignition device accommodating chamber 20.

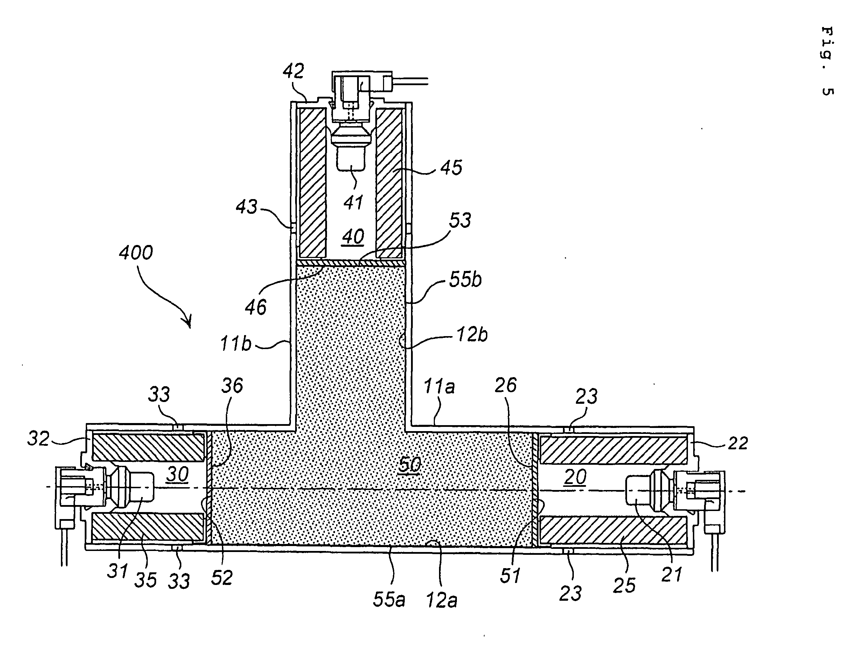

### (5) Gas generator of Fig. 5

Fig. 5 is a sectional view of a gas generator 400 for an air bag. The gas generator 400 for an air bag shown in Fig. 5 has a structure in which an additional housing and an additional ignition device are added to the gas generator 10 for an air bag shown in Fig. 1, and therefore only different parts will be described. Note that in Fig. 5, identical reference numerals to those used in Fig. 1 denote identical components. The gas generator 400 for an air bag of Fig. 5 is suitable for use for driver side or front passenger side.

The housing is structured such that an additional cylindrical housing 11b is connected to a midway point of an identical housing 11a to the housing 11 of Fig. 1. The interior of the housing is not separated, and forms a single space.

The planar form of the combined housings 11a, 11b is a three-pronged form. The same first ignition device accommodating chamber 20 as that of Fig. 1 is disposed on one end portion side, the same second ignition device accommodating chamber 30 as that of Fig. 1 is disposed on the opposite end portion side, and a third ignition device accommodating chamber 40 is disposed on the remaining end portion side. A third igniter 41 fitted into an igniter collar 42 is mounted in the third ignition device accommodating chamber 40. The end portion of the cylindrical housing 11b is integrated with a contact surface of the igniter collar 42 by welding.

There are no particular limitations on the connection position of the housing 11a and housing 11b, and the housing 11b may be connected to a central portion of the housing 11a, or in a position offset toward the second ignition device accommodating chamber 30 side, as shown in the drawing (or conversely, in a position offset toward the first ignition device accommodating chamber 20 side). By adjusting the connection position of the housings 11a, 11b in this manner, and adjusting the activation timing of the three igniters, the combustion pattern of the entire gas generating agent molded article 50 may be adjusted.

A plurality of third gas discharge ports 43 are provided in the part of the housing 11b where the third ignition device accommodating chamber 40 is provided. To ensure moisture resistance, the third gas discharge ports 43 are sealed from the inside by an aluminum tape.

A cylindrical coolant/filter 45 is disposed in the third ignition device accommodating chamber 40. A gap exists between the coolant/filter 45 and the third gas discharge ports 43.

The interior space of the housing (11a, 11b) excluding the first ignition device accommodating chamber 20, second ignition device accommodating chamber 30, and third ignition device accommodating chamber 40 serves as a combustion chamber (gas generating agent charging chamber), and is charged with a three-pronged gas generating agent molded article 50.

The three-pronged gas generating agent molded article 50 has a peripheral surface 55a which contacts a housing inner wall surface 12a, a peripheral surface 55b which contacts a housing inner wall surface 12b, open end faces 51, 52 which do not contact the housing inner wall surface 12a, and an open end face 53 which does not contact the housing inner wall surface 12b.

A disk-form third transfer charge 46 is disposed between the end face 53 of the gas generating agent molded article and the third ignition device accommodating chamber 40 (coolant/filter 45. The disk-form third transfer charge 46 forms an ignition device together with the third igniter 41, and the ignition device (third igniter 41 and third transfer charge 46) faces the end face 53 of the gas generating agent molded article 50. Examples of the plate-form third transfer charge 46 may include a plate-form, combustible (and porous) material such as sponge impregnated with a transfer charge, or a similar combustible material coated with a slurry-form transfer charge.

Next, an operation of the gas generator 400 shown in Fig. 5 when incorporated into an air bag system will be described. The three igniters may be activated simultaneously or at a time difference, or only one or two of the igniters may be activated. Below, a case in which the three igniters are activated at a time difference will be described. Note that differentiation between the terms "first", "second", and "third" in the gas generator 400 is merely for convenience of description and does not limit the activation sequence. Accordingly, the activation sequence of the first igniter 21, second igniter 31, and third igniter 41 is not limited.

The first igniter 21 is activated first, igniting and burning the first transfer charge 26 such that high-temperature combustion products are generated. As a result of these high-temperature combustion products, the gas generating agent molded article 50 begins to burn from the end face 51, generating combustion gas. At this time, the peripheral surface 55a on the end face 51 side is in contact with the housing inner wall surface 12a, and therefore does not burn. Instead, combustion advances in the axial direction only, so as to generate combustion gas.

The generated combustion gas flows into the first ignition device accommodating chamber 20, passes through the coolant/filter 25, and is discharged through the first gas discharge ports 23 to inflate the air bag.

Next, the second igniter 31 is activated at a slight delay after activation of the first igniter 21, thereby igniting and burning the second transfer charge 36 to generate high-temperature combustion products. As a result of these high-temperature combustion products, the gas generating agent molded article 50 begins to burn from the end face 52, generating combustion gas. At this time, the peripheral surface 55a on the end face 52 side is in contact with the housing inner wall surface 12a, and therefore does not burn. Instead, combustion advances in the axial direction only, so as to generate combustion gas.

The generated combustion gas flows into the second ignition device accommodating chamber 30, passes through the coolant/filter 35, and is discharged through the second gas discharge ports 33 to inflate the air bag further.

Next, the third igniter 41 is activated at a slight delay after activation of the second igniter 31 (the second igniter 31 and third igniter 41 may be activated simultaneously), thereby igniting and burning the third transfer charge 46 to generate high-temperature combustion products. As a result of these high-temperature combustion products, the gas generating agent molded article 50 begins to burn from the end face 53, generating combustion gas. At this time, the peripheral surface 55b on the end face 53 side is in contact with the housing inner wall surface 12b, and therefore does not burn. Instead, combustion advances in the axial direction only, so as to generate combustion gas.

The generated combustion gas flows into the third ignition device accommodating chamber 40, passes through the coolant/filter 45, and is discharged through the third gas discharge ports 43 to inflate the air bag even further.

In the gas generator 400 of Fig. 5, combustion may be initiated from the three end faces 51, 52, 53. Hence, by adjusting the activation timing of the three igniters, the generated gas amount per unit time can be adjusted even more finely. The gas generator 400 may also be applied for use in inflating two or three air bags.

Note that in the gas generator of Fig. 5, the housing takes a three-pronged planar form, but the housing may take an L-shaped planar form, and in this case, two or three ignition devices may be provided. Further, in an L-shaped form, the housing 11b of Fig. 5 is formed perpendicular to the housing 11a (such that the angle formed by 11a and 11b is 90°), for example, but a substantially L-shaped form may be provided by increasing or decreasing this angle above or below 90°.

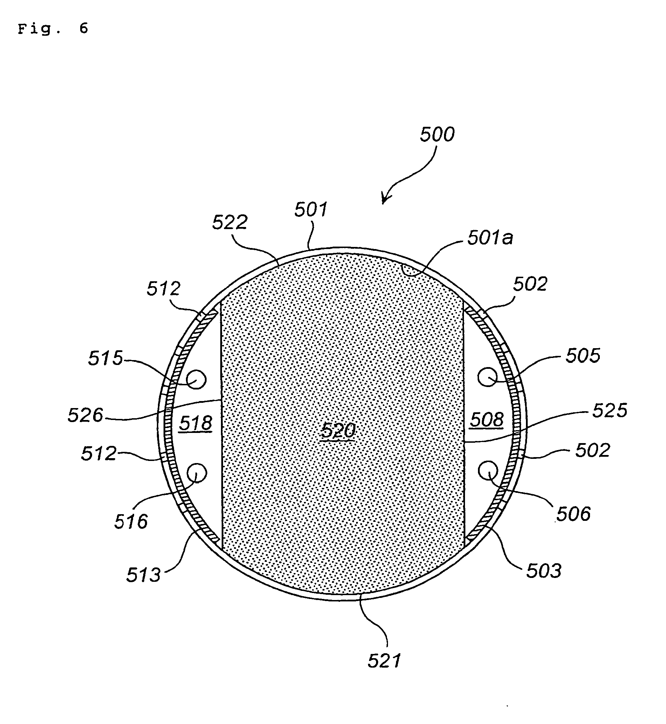

### (6) Gas generator of Fig. 6

Fig. 6 is a radial sectional view of a gas generator 500 for an air bag. The gas generator 500 for an air bag of Fig. 6 is suitable for use for driver side or front passenger side.

A housing 501 has a circular planar form and a thickness that is approximately 0.3 to 0.8 times the diameter.

A plurality of first gas discharge ports 502 are provided in a part of the circumference of the housing 501 corresponding to a single inferior arc. To ensure moisture resistance, an aluminum tape is adhered to the first gas discharge ports 502 from the inside.

A coolant/filter 503 having an arc-shaped planar form is disposed in the housing 501 in the vicinity of the first gas discharge ports 502. A gap is preferably provided, but does not need to be provided, between the first gas discharge ports 502 and coolant/filter 503.

Two first igniters 505, 506 are disposed in the housing 501 in the vicinity of the coolant/filter 503. Thus, a range linking two points on the circumference and forming a single inferior arc serves as a first ignition device accommodating chamber 508.

A plurality of second gas discharge ports 512 are provided in a part of the circumference of the housing 501 corresponding to another inferior arc. To ensure moisture resistance, an aluminum tape is adhered to the second gas discharge ports 512 from the inside.

A coolant/filter 513 having an arc-shaped planar form is disposed in the housing 501 in the vicinity of the second gas discharge ports 512. A gap is preferably provided, but does not need to be provided, between the second gas discharge ports 512 and coolant/filter 513.

Two second igniters 515, 516 are disposed in the housing 501 in the vicinity of the coolant/filter 513. Thus, a range linking two points on the circumference and forming a single inferior arc serves as a second ignition device accommodating chamber 518, and the second ignition device accommodating chamber 518 opposes the first ignition device accommodating chamber 508 in the radial direction.

The interior space of the housing 501 excluding the first ignition device accommodating chamber 508 and second ignition device accommodating chamber 518 serves as a combustion chamber (gas generating agent charging chamber) into which a gas generating agent molded article 520 is charged.

The gas generating agent molded article 520 has two peripheral surfaces 521, 522 contacting a housing inner peripheral surface 501a, two surfaces (upper surface and lower surface) contacting the bottom surface and ceiling surface (not shown) of the housing 501, and two planes 525, 526 which are open to the two ignition device accommodating chambers 508, 518 and do not contact the housing inner peripheral surface 501a. Accordingly, the two first igniters 505, 506 oppose the plane 525 alone, and the two second igniters 515, 516 oppose the plane 526 alone.

Note that the charging container 15 of the gas generator 100 shown in Fig. 2 may also be used in the gas generator 500 of Fig. 6. When the charging container 15 is used, a container which enables formation of the open faces and contact surfaces described above is employed.

Next, an operation of the gas generator 500 shown in Fig. 6 when incorporated into an air bag system will be described. The two igniters may be activated simultaneously or at a time difference, or only one of the igniters may be activated. Below, a case in which the two igniters are activated at a time difference will be described. Note that differentiation between the terms "first" and "second" in the gas generator 500 is merely for convenience of description and does not limit the activation sequence. Accordingly, the second igniters 515, 516 may be activated first, followed by the first igniters 505, 506 at a delay.

One or both of the first igniters 505, 506 is activated first, generating high-temperature combustion products. As a result of these high-temperature combustion products, the gas generating agent molded article 520 begins to burn from the plane 525, generating combustion gas. At this time, the peripheral surfaces 521, 522 on the plane 525 side, the upper surface, and the lower surface are in contact with the housing inner wall surface 501a, ceiling surface, and bottom surface, respectively, and therefore do not burn. Instead, combustion advances in the radial direction only, so as to generate combustion gas.

The generated combustion gas flows through the first ignition device accommodating chamber 508, passes through the coolant/filter 503, and is discharged through the first gas discharge ports 502 to inflate the air bag.

Next, one or both of the second igniters 515, 516 is activated at a slight delay after activation of the first igniters 505, 506, thereby generating high-temperature combustion products. As a result of these high-temperature combustion products, the gas generating agent molded article 520 begins to burn from the plane 526, generating combustion gas. At this time, the peripheral surfaces 521, 522 on the plane 526 side, the upper surface, and the lower surface are in contact with the housing inner wall surface 501a, ceiling surface, and bottom surface, respectively, and therefore do not burn. Instead, combustion advances in the radial direction only, so as to generate combustion gas.

The generated combustion gas flows through the second ignition device accommodating chamber 518, passes through the coolant/filter 513, and is discharged through the second gas discharge ports 512 to inflate the air bag further.

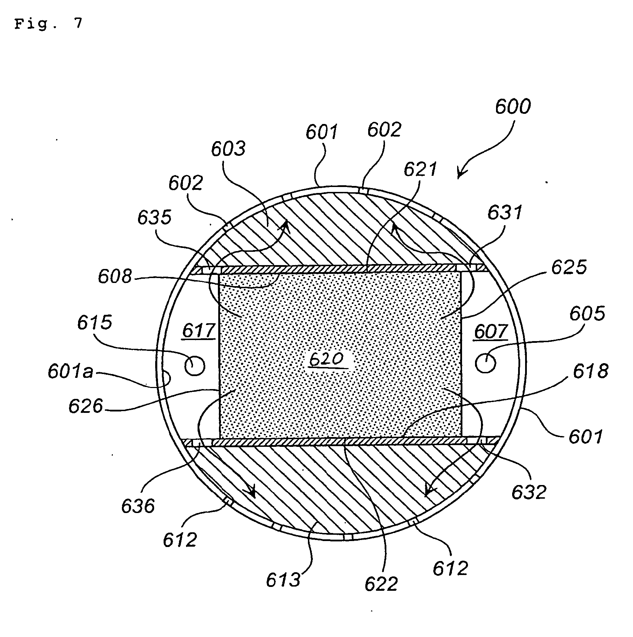

### (7) Gas generator of Fig. 7

Fig. 7 is a radial sectional view of a gas generator 600 for an air bag. The gas generator 600 for an air bag of Fig. 7 is suitable for use for driving side or front passenger side.

A housing 601 has a circular planar form and a thickness that is approximately 0.3 to 0.8 times the diameter.

A plurality of first gas discharge ports 602 are provided in a part of the circumference of the housing 601 corresponding to a single inferior arc. To ensure moisture resistance, an aluminum tape is adhered to the first gas discharge ports 602 from the inside.

A coolant/filter 603 is disposed in the housing 601 near the first gas discharge ports 602 in an area surrounded by the housing 601 and a first partition wall 608 (serving as a combustion control member), which is disposed in a position linking two points on the circumference to form a single inferior arc. A gap is preferably provided, but does not need to be provided, between the first gas discharge ports 602 and coolant/filter 603.

A plurality of second gas discharge ports 612 are provided in a part of the circumference of the housing 601 corresponding to another inferior arc. To ensure moisture resistance, an aluminum tape is adhered to the second gas discharge ports 612 from the inside.

A coolant/filter 613 is disposed in the housing 601 near the second gas discharge ports 612 in an area surrounded by the housing 601 and a second partition wall 618 (serving as a combustion control member), which is disposed in a position linking two points on the circumference to form a single inferior arc. Hence, the coolant/filter 603 and the coolant/filter 613 oppose each other in the radial direction. A gap is preferably provided, but does not need to be provided, between the second gas discharge ports 612 and coolant/filter 613.

A first igniter 605 is disposed on one side of the housing 601 (on one side of the remaining inferior arc) in the part of the housing 601 excluding the coolant/filter 603 and coolant/filter 613, and in the vicinity of a housing inner wall surface 601a, and a second igniter 615 is disposed on the other side (on the other side of the remaining inferior arc). Hence, the first igniter 605 and second igniter 615 oppose each other. The space having a fixed volume in which the first igniter 605 is disposed serves as a first ignition device accommodating chamber 607, and the space having a fixed volume in which the second igniter 615 is disposed serves as a second ignition device accommodating chamber 617.

First communication holes 631, 632 are provided respectively in the part of the first partition wall 608 and second partition wall 618 facing the first ignition device accommodating chamber 607, thereby making the first ignition device accommodating chamber 607 communicate with the coolant/filters 603, 613.

Second communication holes 635, 636 are provided respectively in the part of the first partition wall 608 and second partition wall 618 facing the second ignition device accommodating chamber 617, thereby making the second ignition device accommodating chamber 617 communicate with the coolant/filters 603, 613.

The interior space of the housing 601 excluding the coolant/filter 603, coolant/filter 613, first ignition device accommodating chamber 607, and second ignition device accommodating chamber 617 serves as a combustion chamber (gas generating agent charging chamber) into which a gas generating agent molded article 620 having a rectangular planar form is charged.

The gas generating agent molded article 620 has two side faces (long side side faces) 621, 622 contacting the first partition wall 608 and second partition wall 618, two surfaces (upper surface and lower surface) contacting the bottom surface and ceiling surface (not shown) of the housing 601, and two side faces (short side side faces) 625, 626 which are open to the two ignition device accommodating chambers 607, 617 and do not contact the first partition wall 608 and second partition wall 618. Accordingly, the first igniter 605 opposes the side face 625 alone, and the second igniter 615 opposes the side face 626 alone.

Note that the charging container 15 of the gas generator 100 shown in Fig. 2 may also be used in the gas generator 600 of Fig. 7. When the charging container 15 is used, a container which enables formation of the open faces and contact surfaces described above is employed.

Next, an operation of the gas generator 600 shown in Fig. 7 when incorporated into an air bag system will be described. The two igniters may be activated simultaneously or at a time difference, or only one of the igniters may be activated. Below, a case in which the two igniters are activated at a time difference will be described. Note that differentiation between the terms "first" and "second" in the gas generator 600 is merely for convenience of description and does not limit the activation sequence. Accordingly, the second igniter 615 may be activated first, followed by the first igniter 605 at a delay.

The first igniter 605 is activated first, generating high-temperature combustion products. As a result of these high-temperature combustion products, the gas generating agent molded article 620 begins to burn from the side face 625, generating combustion gas. At this time, the side faces 621, 622 on the side face 625 side, the upper surface, and the lower surface are in contact with the first partition wall 608, the second partition wall 618, the ceiling surface of the housing, and the bottom surface of the housing, respectively, and therefore do not burn. Instead, combustion advances in the radial direction only, so as to generate combustion gas.

The generated combustion gas flows through the first ignition device accommodating chamber 607, passes through the first communication hole 631, and then passes through the coolant/filter 603 to be discharged through the first gas discharge ports 602. The generated combustion gas also passes through the second communication hole 632 and then through the coolant/filter 613 to be discharged through the second gas discharge ports 612. Thus the air bag is inflated.

Next, the second igniter 615 is activated at a slight delay after activation of the first igniter 605, thereby generating high-temperature combustion products. As a result of these high-temperature combustion products, the gas generating agent molded article 620 begins to burn from the side face 626, generating combustion gas. At this time, the side faces 621, 622 on the side face 626 side, the upper surface, and the lower surface are in contact with the first partition wall 608, the second partition wall 618, the ceiling surface of the housing, and the bottom surface of the housing, respectively, and therefore do not burn. Instead, combustion advances in the radial direction only, so as to generate combustion gas.

The generated combustion gas flows through the second ignition device accommodating chamber 617, passes through the first communication hole 635, and then passes through the coolant/filter 603 to be discharged through the first gas discharge ports 602. The generated combustion gas also passes through the second communication hole 636 and then through the coolant/filter 613 to be discharged through the second gas discharge ports 612. Thus the air bag is further inflated.

The invention thus described, it will be obvious that the same may be varied in many ways. Such variation s are not to be regarded as a departure from the spirit and scope of the invention, and all such modifications as would be obvious to one skilled in the art are intended to be included within the scope of the following claims.

## Claims

1. A gas generator (10) for an air bag comprising:
a housing (11) having a plurality of gas discharge ports (23, 33);
a gas generating agent molded article(50) formed in a desired three-dimensional shape having a plurality of surfaces (51, 52, 55), which is charged into the housing (11);
the gas generating agent molded article (50), formed in the desired three-dimensional shape, having a plurality of open faces (51, 52) that do not contact a housing (11) inner wall surface (12),
**characterized by** the gas generating molded article (50) having a contact surface (55) contacting the housing (11) inner wall surface (12); wherein the gas generator (10) further comprises: a plurality of ignition devices (21, 31) for igniting and burning the gas generating agent molded article (50),
at least one ignition device (21, 31) being disposed facing one of the open faces (51, 52),
the gas generating agent molded article(50), formed in the desired three-dimensional shape, being ignited and beginning to burn only from the open faces (51, 52) so that combustion can progress in a plurality of different directions.

2. The gas generator (10) for an air bag according to claim 1, wherein the gas generating agent molded article (50) is charged into a charging container (15) having a desired shape, and has a contact surface (55) contacting an inner wall surface (16)of the charging container (15), and
a plurality of open faces (51, 52) that do not contact the inner wall surface (16) of the charging container (15), and the charging container (15) is inserted into the housing (11).

3. The gas generator (600) for an air bag according to claim 1, wherein a combustion control member (608, 618) is also disposed in the housing (601), and
the gas generating agent molded article(620) has a contact surface (621, 622) contacting the combustion control member (608, 618), or the combustion control member (608, 618) and the housing (601) inner wall surface, and a plurality of open faces (625, 626) that do not contact the combustion control member (608, 618), or the combustion control member (608, 618) and the housing (601) inner wall surface.

4. The gas generator (200) for an air bag according to claim 1 or 2, wherein the gas generating agent molded article (50) is ignited and begins to burn from the open faces (51, 52) alone, and a combustion surface area of the gas generating agent molded article (50) is set to vary as the combustion progresses.

5. The gas generator (10) for an air bag according to any one of claims 1 to 4, wherein the plurality of gas discharge ports (23, 33) are formed with distance from each other, and combustion gas generated by the combustion of the gas generating agent molded article (50) passes along different gas discharge paths to be discharged through the different gas discharge ports (23, 33).

6. The gas generator for an air bag according to claim 1, wherein said housing (11) is a cylindrical housing (11), both ends of which are closed;
said gas generating agent molded article (50) is columnar;
said columnar gas generating agent molded article (50) having a peripheral surface (55) contacting said housing (11) inner wall surface (12), and two open end faces (51, 52) which do not contact the housing (11) inner wall surface (12),
at least one ignition device (21, 31) being disposed at each end of the housing (11), facing one of the end faces of the columnar gas generating agent molded article (50), the columnar gas generating agent molded article (50) being ignited and beginning to burn only from the two open end faces.

7. The gas generator for an air bag according to claim 1, wherein said housing (11) is a three-pronged housing (11 a, 11 b) having a three-pronged planar form and provided with a plurality of gas discharge ports (23, 33, 43) in each of three end portion sides thereof;
said gas generating agent molded article (50) being a three-pronged gas generating agent molded article (50) charged into the three-pronged housing (11a, 11b);
the three-pronged gas generating agent molded article (50) having a peripheral surface (55a, 55b) contacting a housing inner wall surface (12a, 12b), and three open end faces (51, 52, 53) which do not contact the housing inner wall surface (12a, 12b), at least one of said ignition devices (21, 31, 41) being disposed at each of the three end portions of the housing (11 a, 11 b), facing one of the open end faces (51, 52, 53) of the three-pronged gas generating agent molded article (50), and
the three-pronged gas generating agent molded article being ignited and beginning to burn only from the three open end faces.

8. The gas generator (500;600) for an air bag according to claim 1,
said housing (501; 601) having a circular planar form and a predetermined thickness, provided with a plurality of said gas discharge ports (502, 512; 602, 612) in one inferior arc opposing another inferior arc;
said gas generating agent molded article(520; 620) being charged into the interior of the housing (501; 601) except for the vicinity of the two inferior arcs;
said gas generating agent molded article (520; 620) having a contact surface (521, 522) contacting an inner peripheral surface, a ceiling surface, and a bottom surface of the housing (501; 601), and two open faces (525, 526; 625, 626) open to the two inferior arc sides, which do not contact the inner peripheral surface, the ceiling surface, and the bottom surface of the housing (501; 601),
at least one of said ignition devices (505, 506, 515, 516; 605, 615) being disposed at each of the open faces (525, 526; 625, 626), facing one open face (525, 526; 625, 626), and
the gas generating agent molded article (520; 620) is ignited and begins to burn only from the two open faces (525, 526; 625, 626).

9. The gas generator (600) for an air bag according to claim 1,
said housing (601) having a circular planar form and a predetermined thickness, provided with a plurality of gas discharge ports (602, 612) in one inferior arc opposing another inferior arc;
said gas generating agent molded article(620) being charged into the interior of the housing (601) except for the vicinity of the two inferior arcs; and
two partition walls (608, 618) being disposed to have a linking of two points on the circumference to form the two opposing inferior arc parts, and a coolant/filter (603, 613) being disposed between the gas discharge ports (602, 612) and each partition wall (608, 618),
the ignition device (605, 615) being disposed in each of two remaining opposing inferior arc parts,
the gas generating agent molded article (620) having a contact surface (621, 622) contacting the two partition walls (608, 618), a ceiling surface of the housing (601), and a bottom surface of the housing (601), and two open faces (625, 626) open to the two ignition device (605, 615) sides, which do not contact the two partition walls (608, 618), the ceiling surface of the housing (601), and the bottom surface of the housing (601),
the gas generating agent molded article (620) ignited and beginning to burn only from the two open faces.

## Patentansprüche

1. Ein Gasgenerator (10) für einen Airbag, umfassend:
ein Gehäuse (11) mit einer Vielzahl von Gasauslassöffnungen (23, 33);
einen aus einem Gas erzeugenden Stoff geformten Gegenstand (50), der in eine erwünschte dreidimensionale Gestalt mit einer Vielzahl von Oberflächen (51, 52, 55) geformt ist, welcher in das Gehäuse (11) eingefüllt ist;
wobei der aus einem Gas erzeugenden Stoff geformte Gegenstand (50), der in der erwünschten dreidimensionalen Gestalt geformt ist, eine Vielzahl von offenen Flächen (51, 52) aufweist, die sich nicht mit einer inneren Wandoberfläche (12) des Gehäuses (11) in Kontakt befinden,
**dadurch gekennzeichnet, dass** der aus einem Gas erzeugenden Stoff geformte Gegenstand (50) eine Kontaktoberfläche (55) aufweist, die sich mit der inneren Wandoberfläche (12) des Gehäuses (11) in Kontakt befindet; wobei der Gasgenerator (10) ferner umfasst: eine Vielzahl von Zündeinrichtungen (21, 31) zum Zünden und zum Verbrennen des aus einem Gas erzeugenden Stoff geformten Gegenstands (50),
wobei zumindest eine der Zündeinrichtungen (21, 31) derart angeordnet ist, um einer der offenen Flächen (51, 52) gegenüberzustehen,
wobei der aus einem Gas erzeugenden Stoff geformte Gegenstand (50), der in der erwünschten dreidimensionalen Gestalt geformt ist, nur von den offenen Flächen (51, 52) entzündet wird und zu brennen beginnt, so dass die Verbrennung in einer Vielzahl von unterschiedlichen Richtungen voranschreiten kann.

2. Gasgenerator (10) für einen Airbag im Einklang mit Anspruch 1, wobei der aus einem Gas erzeugenden Stoff geformte Gegenstand (50) in einen Einfüllbehälter (15) mit einer erwünschten Form eingefüllt ist, und eine Kontaktoberfläche (55) aufweist, welche sich mit einer inneren Wandoberfläche (16) des Einfüllbehälters (15) in Kontakt befindet, und eine Vielzahl von offenen Flächen (51, 52), welche sich nicht mit der inneren Wandoberfläche (16) des Einfüllbehälters (15) in Kontakt befinden, wobei der Einfüllbehälter (15) in das Gehäuse (11) eingefügt ist.

3. Der Gasgenerator (600) für einen Airbag im Einklang mit Anspruch 1, wobei ein Verbrennungssteuerelement (608, 618) ebenfalls in dem Gehäuse (601) angeordnet ist, wobei der aus einem Gas erzeugenden Stoff geformte Gegenstand (620) eine Kontaktoberfläche (621, 622) aufweist, welche sich mit dem Verbrennungssteuerelement (608, 618), oder mit dem Verbrennungssteuerelement (608, 618) und mit der inneren Wandoberfläche des Gehäuses (601) in Kontakt befindet, und eine Vielzahl von offenen Flächen (625, 626), welche sich nicht mit dem Verbrennungssteuerelement (608, 618), oder mit dem Verbrennungssteuerelement (608, 618) und mit der inneren Wandoberfläche des Gehäuses (601) in Kontakt befinden.

4. Der Gasgenerator (200) für einen Airbag im Einklang mit Anspruch 1 oder 2, wobei der aus einem Gas erzeugenden Stoff geformte Gegenstand (50) nur von den offenen Flächen (51, 52) entzündet wird und zu brennen beginnt, wobei ein Verbrennungsoberflächenbereich des aus einem Gas erzeugenden Stoff geformten Gegenstands (50) eingestellt ist, um zu variieren, wenn die Verbrennung voranschreitet.

5. Der Gasgenerator (10) für einen Airbag im Einklang mit einem der Ansprüche 1 bis 4, wobei die Vielzahl der Gasauslassöffnungen (23, 33) mit einem Abstand voneinander ausgebildet ist, wobei das durch die Verbrennung des aus einem Gas erzeugenden Stoff geformten Gegenstands (50) erzeugte Verbrennungsgas entlang unterschiedlicher Gasauslasspfade verläuft, um durch die unterschiedlichen Gasauslassöffnungen (23, 33) abgelassen zu werden.

6. Der Gasgenerator für einen Airbag im Einklang mit Anspruch 1, wobei das besagte Gehäuse (11) ein zylindrisches Gehäuse (11) ist, wobei beide Enden davon geschlossen sind;
wobei der besagte aus einem Gas erzeugenden Stoff geformte Gegenstand (50) säulenförmig ist:
wobei der besagte säulenförmige und aus einem Gas erzeugenden Stoff geformte Gegenstand (50) eine umfangsseitige Oberfläche (55) aufweist, welche sich mit einer inneren Wandoberfläche (12) des besagten Gehäuses (11) in Kontakt befindet, und zwei offene endseitige Flächen (51, 52), welche sich nicht mit der inneren Wandoberfläche (12) des Gehäuses (11) in Kontakt befinden, wobei zumindest eine Zündeinrichtung (21, 31) jeweils an einem Ende des Gehäuses (11) angeordnet ist und einer der endseitigen Flächen des säulenförmigen und aus einem Gas erzeugenden Stoff geformten Gegenstands (50) gegenüberliegt, wobei der säulenförmige und aus einem Gas erzeugenden Stoff geformte Gegenstand (50) ausgehend von den alleine den zwei offenen endseitigen Flächen entzündet wird und zu brennen beginnt.

7. Der Gasgenerator für einen Airbag im Einklang mit Anspruch 1, wobei das besagte Gehäuse (11) ein dreizackiges Gehäuse (11 a, 11 b) mit einer dreizackigen planaren Form ist, und mit einer Vielzahl von Gasauslassöffnungen (23, 33, 43) auf jeder der drei Seiten der Endabschnitte davon ausgebildet ist;
wobei der besagte aus einem Gas erzeugenden Stoff geformte Gegenstand (50) ein dreizackiger und aus einem Gas erzeugenden Stoff geformter Gegenstand (50) ist, der in das dreizackige Gehäuse (11a, 11 b) eingefüllt ist; wobei der dreizackige und aus einem Gas erzeugenden Stoff geformte Gegenstand (50) eine umfangsseitige Oberfläche (55a, 55b) aufweist, welche sich mit einer inneren Wandoberfläche (12a, 12b) des Gehäuses in Kontakt befindet, und drei offene endseitige Flächen (51, 52, 53), welche sich nicht mit der inneren Wandoberfläche (12a, 12b) des Gehäuses in Kontakt befinden, wobei zumindest eine der besagten Zündeinrichtungen (21, 31, 41) an jedem der drei endseitigen Abschnitte des Gehäuses (11a, 11 b) angeordnet ist und einer der offenen endseitigen Flächen (51, 52, 53) des dreizackigen und aus einem Gas erzeugenden Stoff geformten Gegenstands (50) gegenüberliegt, und wobei der dreizackige und aus einem Gas erzeugenden Stoff geformte Gegenstand nur von den drei offenen endseitigen Flächen entzündet wird und zu brennen beginnt.

8. Der Gasgenerator (500; 600) für einen Airbag im Einklang mit Anspruch 1, wobei das besagte Gehäuse (501; 601) eine kreisförmige planare Form und eine vorgegebene Dicke aufweist, und mit einer Vielzahl der besagten Gasauslassöffnungen (502, 512; 602, 612) in einem unteren Bogen gegenüberliegend zu einem anderen unteren Bogen ausgebildet ist;
wobei der besagte aus einem Gas erzeugenden Stoff geformte Gegenstand (520; 620) in den Innenraum des Gehäuses (501; 601) eingefüllt ist, mit Ausnahme der Umgebung der zwei unteren Bögen;
wobei der besagte aus einem Gas erzeugenden Stoff geformte Gegenstand (520; 620) eine Kontaktoberfläche (521, 522) aufweist, welche sich mit einer inneren umfangsseitigen Oberfläche, mit einer deckenseitigen Oberfläche und mit einer bodenseitigen Oberfläche des Gehäuses (501; 601) in Kontakt befindet, und zwei offene Flächen (525, 526; 625, 626), die zu den zwei Seiten der unteren Bögen geöffnet sind, welche sich nicht mit der inneren umfangsseitigen Oberfläche, mit der deckenseitigen Oberfläche und mit der bodenseitigen Oberfläche des Gehäuses (501; 601) in Kontakt befinden,
wobei zumindest eine der besagten Zündeinrichtungen (505, 506, 515, 516; 605, 615) an jeder der offenen Flächen (525, 526; 625, 626) angeordnet ist und einer offenen Fläche (525, 526; 626, 626) gegenüberliegt, und
wobei der besagte aus einem Gas erzeugenden Stoff geformte Gegenstand (520; 620) nur von den zwei offenen Flächen (525, 526; 625, 626) entzündet wird und zu brennen beginnt.

9. Der Gasgenerator (600) für einen Airbag im Einklang mit Anspruch 1, wobei das besagte Gehäuse (601) eine kreisförmige planare Form und eine vorgegebene Dicke aufweist, und mit einer Vielzahl von Gasauslassöffnungen (602, 612) in einem unteren Bogen gegenüberliegend zu einem anderen unteren Bogen ausgebildet ist;
wobei der besagte aus einem Gas erzeugenden Stoff geformte Gegenstand (620) in den Innenraum des Gehäuses (601) mit Ausnahme der Umgebung der zwei unteren Bögen eingefüllt ist; und
wobei zwei Trennwände (608, 618) derart angeordnet sind, um eine Verbindung von zwei Punkten an dem Umfang zur Ausbildung der zwei sich gegenüberliegenden unteren Bogenteile aufzuweisen, wobei eine Kühl-/Filtereinrichtung (603, 613) zwischen den Gasauslassöffnungen (602, 612) und jeder Trennwand (608, 618) angeordnet ist, wobei die Zündeinrichtung (605, 615) in jeder der zwei verbleibenden und sich gegenüberliegenden unteren Bogenteile angeordnet ist, wobei der aus einem Gas erzeugenden Stoff geformte Gegenstand (620) eine Kontaktoberfläche (621, 622) aufweist, welche sich mit den zwei Trennwänden (608, 618), mit einer deckenseitigen Oberfläche des Gehäuses (601) und mit einer bodenseitigen Oberfläche des Gehäuses (601) in Kontakt befindet, und zwei offene Flächen (625, 626), die zu den Seiten der zwei Zündeinrichtungen (605, 615) geöffnet sind und welche sich nicht mit den zwei Trennwänden (608, 618), mit der deckenseitigen Oberfläche des Gehäuses (601) und mit der bodenseitigen Oberfläche des Gehäuses (601) in Kontakt befinden, wobei der aus einem Gas erzeugenden Stoff geformte Gegenstand (620) nur von den zwei offenen Flächen entzündet wird und zu brennen beginnt.

## Revendications

1. Générateur de gaz (10) pour un coussin gonflable de sécurité comprenant :
un logement (11) ayant une pluralité d'orifices d'évacuation de gaz (23, 33);
un article moulé d'agent de génération de gaz (50) formé dans une forme tridimensionnelle désirée ayant une pluralité de surfaces (51, 52, 55), qui est chargé dans le logement (11);
l'article moulé d'agent de génération de gaz (50), formé dans la forme tridimensionnelle désirée, ayant une pluralité de faces ouvertes (51, 52) qui ne sont pas en contact avec une surface de paroi interne (12) du logement (11),
**caractérisé en ce que** l'article moulé de génération de gaz (50) possède une surface de contact (55) entrant en contact avec la surface de paroi intérieure (12) du logement (11); où le générateur de gaz (10) comprend en outre : une pluralité de dispositifs d'allumage (21, 31) pour l'allumage et la combustion de l'article moulé d'agent de génération de gaz (50),
au moins un dispositif d'allumage (21, 31) étant disposé en face de l'une des faces ouvertes (51, 52),
l'article moulé d'agent de génération de gaz (50), formé dans la forme tridimensionnelle désirée, étant allumé et commençant à brûler seulement à partir des faces ouvertes (51, 52) de sorte que la combustion puisse progresser dans une pluralité de directions différentes.

2. Générateur de gaz (10) pour un coussin gonflable de sécurité selon la revendication 1, dans lequel l'article moulé d'agent de génération de gaz (50) est chargé dans un conteneur de changement (15) ayant une forme désirée, et possède une surface de contact (55) entrant en contact avec une surface de paroi intérieure (16) du conteneur de chargement (15), et
une pluralité de faces ouvertes (51, 52) qui n'entrent pas en contact avec la surface de paroi intérieure (16) du conteneur de chargement (15), et le conteneur de changement (15) est inséré dans le logement (11).

3. Générateur de gaz (600) pour un coussin gonflable de sécurité selon la revendication 1, dans lequel un élément de commande de combustion (608, 618) est également disposé dans le logement (601), et l'article moulé d'agent de génération de gaz (620) possède une surface de contact (621, 622) entrant en contact avec l'élément de commande de combustion (608, 618), ou l'élément de commande de combustion (608, 618) et la surface de paroi intérieure de logement (601), et une pluralité de faces ouvertes (625, 626) qui ne sont pas en contact avec l'élément de commande de combustion (608, 618), ou l'élément de commande de combustion (608, 618) et la surface de paroi intérieure de boîtier (601).

4. Générateur de gaz (200) pour un coussin gonflable de sécurité selon la revendication 1 ou 2, dans lequel l'article moulé d'agent de génération de gaz (50) est allumé et commence à brûler à partir des faces ouvertes (51, 52) seules, et une zone de surface de combustion de l'article moulé d'agent de génération de gaz (50) est déterminée pour varier à mesure que la combustion progresse.

5. Générateur de gaz (10) pour un coussin gonflable de sécurité selon l'une quelconque des revendications 1 à 4, dans lequel la pluralité d'orifices d'évacuation de gaz (23, 33) sont formés à distance les uns des autres, et un gaz de combustion généré par la combustion de l'article moulé d'agent de génération de gaz (50) passe le long de différentes voies d'évacuation de gaz pour être évacué par les différents orifices d'évacuation de gaz (23, 33).

6. Générateur de gaz pour un coussin gonflable de sécurité selon la revendication 1, dans lequel ledit logement (11) est un logement cylindrique (11), dont les deux extrémités sont fermées ;
ledit article moulé d'agent de génération de gaz (50) est colonnaire ;
ledit article moulé d'agent de génération de gaz colonnaire (50) ayant une surface périphérique (55) entrant en contact avec ladite surface de paroi intérieure (12) du logement (11), et deux faces d'extrémité ouvertes (51, 52) qui ne sont pas en contact avec la surface de paroi intérieure (12) du logement (11),
au moins un dispositif d'allumage (21, 31) étant disposé à chaque extrémité du logement (11), faisant face à l'une des faces d'extrémité de l'article moulé d'agent de génération de gaz colonnaire (50), l'article moulé d'agent de génération de gaz colonnaire (50) étant allumé et commençant à brûler seulement à partir des deux faces d'extrémité ouvertes.

7. Générateur de gaz pour un coussin gonflable de sécurité selon la revendication 1, dans lequel ledit logement (11) est un logement à trois branches (11a, 11b) ayant une forme plane à trois branches et étant muni d'une pluralité d'orifices d'évacuation de gaz (23, 33, 43) dans chacun de ses trois côtés de partie d'extrémité ;
ledit article moulé d'agent de génération de gaz (50) étant un article moulé d'agent de génération de gaz à trois branches (50) chargé dans le logement à trois branches (11a, 11b) ;
l'article moulé d'agent de génération de gaz à trois branches (50) ayant une surface périphérique (55a, 55b) entrant en contact avec une surface de paroi intérieure de logement (12a, 12b), et trois faces d'extrémité ouvertes (51, 52, 53) qui ne sont pas en contact avec la surface de paroi intérieure de logement (12a, 12b), au moins l'un desdits dispositifs d'allumage (21, 31, 41) étant disposé à chacune des trois parties d'extrémité du logement (11a, 11b), faisant face à l'une des faces d'extrémité ouvertes (51, 52, 53) de l'article moulé d'agent de génération de gaz à trois branches (50), et
l'article moulé d'agent de génération de gaz à trois branches étant allumé et commençant à brûler seulement à partir des trois faces d'extrémité ouvertes.

8. Générateur de gaz (500 ; 600) pour un coussin gonflable de sécurité selon la revendication 1,
ledit logement (501 ; 601) ayant une forme plane circulaire et une épaisseur prédéterminée, est muni d'une pluralité desdits orifices d'évacuation de gaz (502, 512 ; 602, 612) dans un arc inférieur opposé à un autre arc inférieur ;
ledit article moulé d'agent de génération de gaz (520 ; 620) étant chargé dans l'intérieur du logement (501 ; 601) excepté au voisinage des deux arcs inférieurs ;
ledit article moulé d'agent de génération de gaz (520 ; 620) ayant une surface de contact (521, 522) entrant en contact avec une surface périphérique intérieure, une surface de plafond, et une surface de fond du logement (520 ; 601), et deux faces ouvertes (525, 526 ; 625, 626) ouvertes aux deux côtés d'arc inférieur, qui ne sont pas en contact avec la surface périphérique intérieure, la surface de plafond, et la surface de fond du logement (501 ; 601),
au moins l'un desdits dispositifs d'allumage (505, 506, 515, 516 ; 605, 615) étant disposé à chacune des faces ouvertes (525, 526 ; 625, 626), faisant face à une face ouverte (525, 526 ; 625, 626), et
l'article moulé d'agent de génération de gaz (520 ; 620) est allumé et commence à brûler seulement à partir des deux faces ouvertes (525, 526 ; 625, 626).

9. Générateur de gaz (600) pour un coussin gonflable de sécurité selon la revendication 1,
ledit logement (601) ayant une forme plane circulaire et une épaisseur prédéterminée, est muni d'une pluralité d'orifices d'évacuation de gaz (602, 612) dans un arc inférieur opposé à un autre arc inférieur ;
ledit article moulé d'agent de génération de gaz (620) étant chargé dans l'intérieur du logement (601) excepté au voisinage des deux arcs inférieurs ; et
deux parois de séparation (608, 618) étant disposées pour avoir une liaison de deux points sur la circonférence pour former les deux parties d'arc inférieur opposées, et un réfrigérant/filtre (603, 613) étant disposé entre les orifices d'évacuation de gaz (602, 612) et chaque paroi de séparation (608, 618),
le dispositif d'allumage (605, 615) étant disposé dans chacune des deux parties d'arc inférieur opposées restantes,
l'article moulé d'agent de génération de gaz (620) ayant une surface de contact (621, 622) entrant en contact avec les deux parois de séparation (608, 618), une surface de plafond du logement (601), et une surface de fond du logement (601), et deux faces ouvertes (625, 626) ouvertes aux deux côtés du dispositif d'allumage (605, 615), qui ne sont pas en contact avec les parois de séparation (608, 618), la surface de plafond du logement (601), et la surface de fond du logement (601),
l'article moulé d'agent de génération de gaz (620) est allumé et commence à brûler seulement à partir des deux faces ouvertes.
